# EUROPEAN PATENT SPECIFICATION

(11) **EP 0 298 549 B1**
(45) Date of publication and mention of the grant of the patent: **15.12.1993**
(21) Application number: 88201339.4
(22) Date of filing: 29.06.1988
(51) Int. Cl.: A01C 17/00

(54) **A machine for spreading material, such as fertilizer**
Streuer für Material, wie Dünger
Epandeur de matériau tel que de l'engrais

(30) Priority: 02.07.1987 NL 8701551
(43) Date of publication of application: 11.01.1989
(73) Proprietor: MAASLAND N.V., 3155 PD Maasland (NL)
(72) Inventor: Van der Lely, Cornelis, ZUG (CH)
(74) Representative: Mulder, Herman

(56) References cited:
- EP-A- 0 117 005
- EP-A- 0 166 136
- EP-A- 0 251 401
- DE-A- 2 132 041
- FR-A- 2 414 860
- GB-A- 2 163 032
- US-A- 2 474 065
- US-A- 3 928 751
- US-A- 4 163 507
- US-A- 4 166 948

## Description

The invention relates to a machine for spreading material, such as fertilizer, which machine comprises a frame, a hopper and at least one driven spreading member, the machine includes at least two doser apertures for delivering the material from the hopper to one single spreading member which spread during operation of the machine the material over a circumferential angle around the spreading member, which circumferential angle includes a number of sectors equal to the number of doser apertures each of which provides substantially material to one sector, doser slides being provided movably along the apertures and the doser slides being connected with an adjusting member to close the apertures to a greater or lesser extent.

A machine of this kind is known from the EP-A-0117005. In this known machine for each spreading member two doser apertures are provided. The doser apertures can be closed by dosing slides to a greater or lesser extent to be able to adjust the quantity of material which can be spread over a unity of surface. Further each of the doser apertures can be closed by the respective doser slide by setting a part of the adjusting member in a respective fixed position, whereas the other doser slide can be adjusted to close the respective doser aperture to a greater or lesser extent.

It is an object of the invention to effect a highest possible uniform distribution of the spread material over the working width.

According to the invention each doser slide is connected with a separate adjusting member and the adjusting members each being separately actuateable to close the doser apertures separately to a greater or lesser extent, each of the adjusting members is cooperative with a measuring unit provided in the machine and able to measure the distribution of the material spread during operation of the machine over the sections of the circumferential angle.

Each of the doser apertures provides substantially one sector with material during operation of the device. Owing to the cooperation of the separately actuateable adjusting members with the measuring unit the distribution over the sectors of the circumferential angle can be adjusted to obtain the wished uniform distribution of the material over the whole working width over which the material can be spread during operation of the machine.

A very useful embodiment of the machine according to the invention can be obtained when each of the adjusting members is coupled with the measuring unit through the intermediary of a display device which displays the distribution of the material over the sectors of the circumferential angle. In a further embodiment of the machine according to the invention the display device includes a digit for each sector to display the quantity of material spread over the respective sector. Herewith the providing of material by each doser aperture to the respective sector can be controlled easily by the driver.

In an advantageous embodiment of the machine according to the invention the display device is provided with means with which the desired distribution can be set, the said means and the measuring device being coupled to control the size of the doser apertures automatically. According to a further embodiment of the invention for each adjusting member and respective aperture at least one measuring unit is provided near the circumference of the spreading member in a fixed position in the machine. In a further construction of the machine according to the invention the measuring units can measure the distribution of the material over the circumferential angle by a quantity of light or changes in a quantity of light which intersects the material spread over the said circumferential angle during operation of the device.

According to the invention, the machine includes a measuring device for measuring the quantity of material spread by means of laser beams.

According to the invention, the machine includes a measuring device for measuring ambient light.

The invention furthermore includes the feature that the machine is provided with a device, by means of which, during operation, it is possible to measure the quantity of material spread per unit of surface by light measurement.

In accordance with a further feature of the invention, the machine includes a device, by means of which, during operation, it is possible to measure by light measurement whether the spread pattern of the material spread is centred behind the machine.

The invention also relates to means for cleaning the measuring equipment provided on the machine.

In accordance with a further embodiment of the invention, the hopper includes a plurality of doser apertures which are arranged in side-by-side relationship and feed the material to one single spreading member.

According to the invention, the machine includes only one spreading member which is rotatable about an upwardly directed shaft and, positioned thereabove, a doser device which is rotatable about an approximately horizontal shaft.

For a better understanding of the invention and to show how the same may be carried into effect, reference will now be made, by way of example, to the accompanying drawing, in which:
Figure 1 is a side view of a machine according to the invention;
Figure 2 is a plan view of a machine shown in Figure 1;
Figure 3 is partly a cross-sectional view and partly a view taken on the line III - III in Figure 2;
Figure 4 is, to an enlarged scale, a plan view taken in the direction of the arrow IV in Figure 3;
Figure 5 is a cross-sectional view and partly a view taken on the line V - V in Figure 3;
Figure 6 is a view taken on the line VI - VI in Figure 3;
Figure 7 is an embodiment of a display and adjusting device to be used with a machine according to the invention, and
Figure 8 is an embodiment of an other display device to be used with the machine according to the invention.

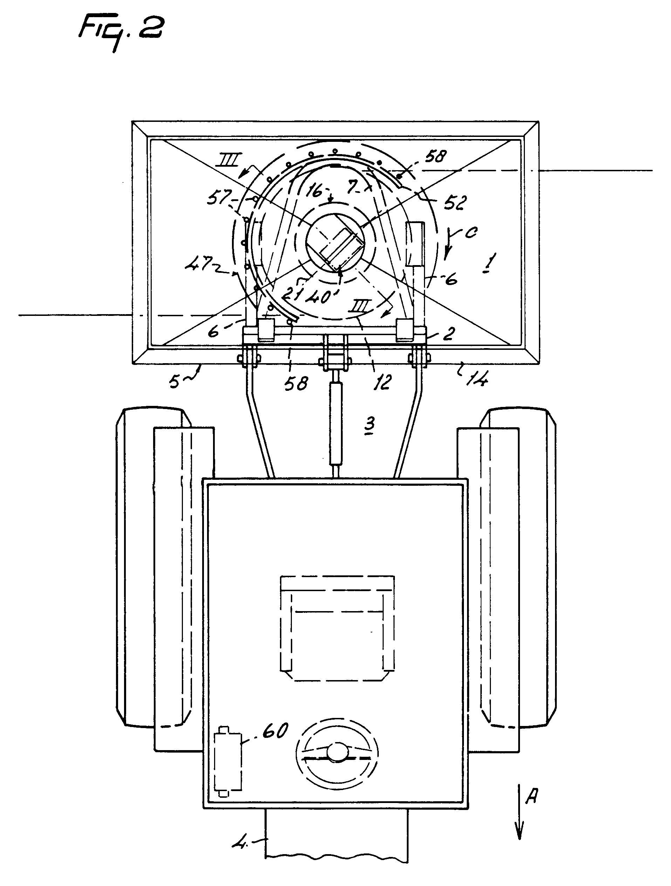

The machine according to the invention is a machine for spreading material, in particular fertilizer, which machine comprises a frame 1 including a trestle 2, by means of which the machine can be connected to a three-point lifting hitch 3 of a tractor 4 hauling the machine, during operation. The machine comprises a hopper 5 which is supported by means of two carrier beams 6, which are connected to the trestle 2 and extend rearwardly relative to the direction of operative travel, and also by the frame in the region of the upper side of the said trestle 2. Under the hopper 5 there is arranged a base 7, which is also connected to the trestle 2. The base 7, which has for its object to support the machine on the soil, also carries a gear box 8 which includes an ingoing shaft emerging in the direction of operative travel A, which shaft is coupled to a power take-off shaft 10 of the tractor 4 via an intermediate shaft 9. The gear box 8 includes an upwardly directed outgoing shaft, whose centre line 11, seen in plan view according to Figure 2, approximately coincides with the centre of the hopper 5.

In this embodiment, the outgoing shaft of the gear box 8 drives only one thrower disc or spreading member 12 arranged between the gear box 8 and the hopper 5, which spreading member is provided in a known manner with a plurality of blades 13 which are arranged along the periphery of the, in plan view approximately circular, spreading member and guide the material falling from the hopper on the spreading member outwardly and in a direction perpendicular to that of the centre line 11 so as to form a spread pattern of the material spread.

Consequently, the spreading member 12 is drivable about the centre line 11 of the outgoing shaft of the gear box 8.

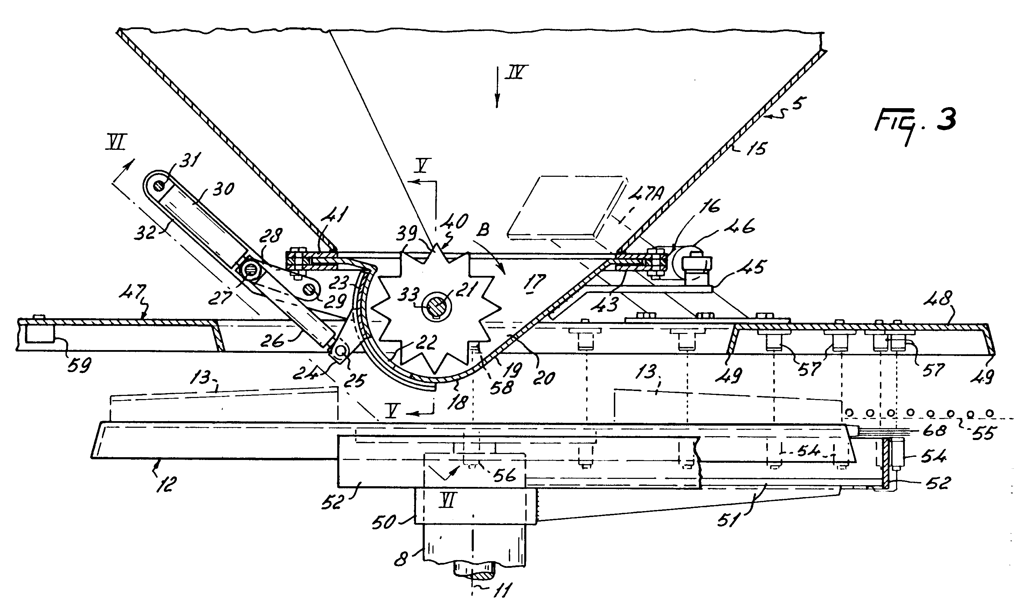

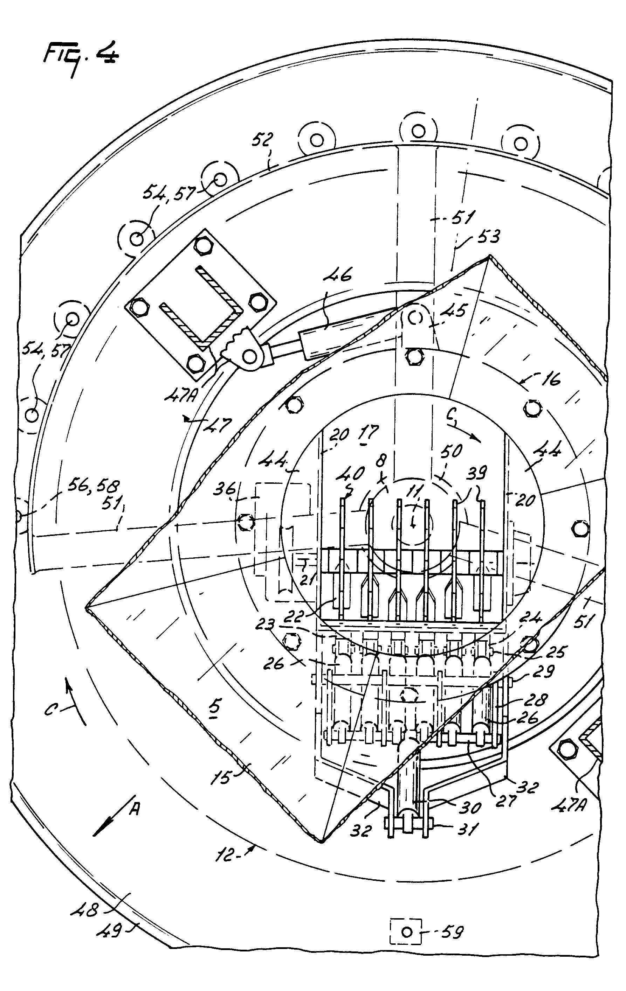

The hopper 5 includes an upper portion 14 which has the shape of a truncated pyramid, whose imaginary apex is located above the machine. The lower, approximately rectangular boundary edge of the upper portion 14 also constitutes the upper boundary edge of a lower portion 15 of the hopper 5, which portion 15 extends downwardly from the said edge and initially has the shape of a pyramid; however, this shape gradually merges into that of a truncated cone, whose imaginary apex is located below the lower portion 15 itself. Consequently, the lower edge of the portion 15 is circular and is located concentrically about the centre line 11; in Figures 3 and 4, the said lower edge is denoted by reference numeral 16 and extends parallel to a plane located perpendicularly to the centre line 11.

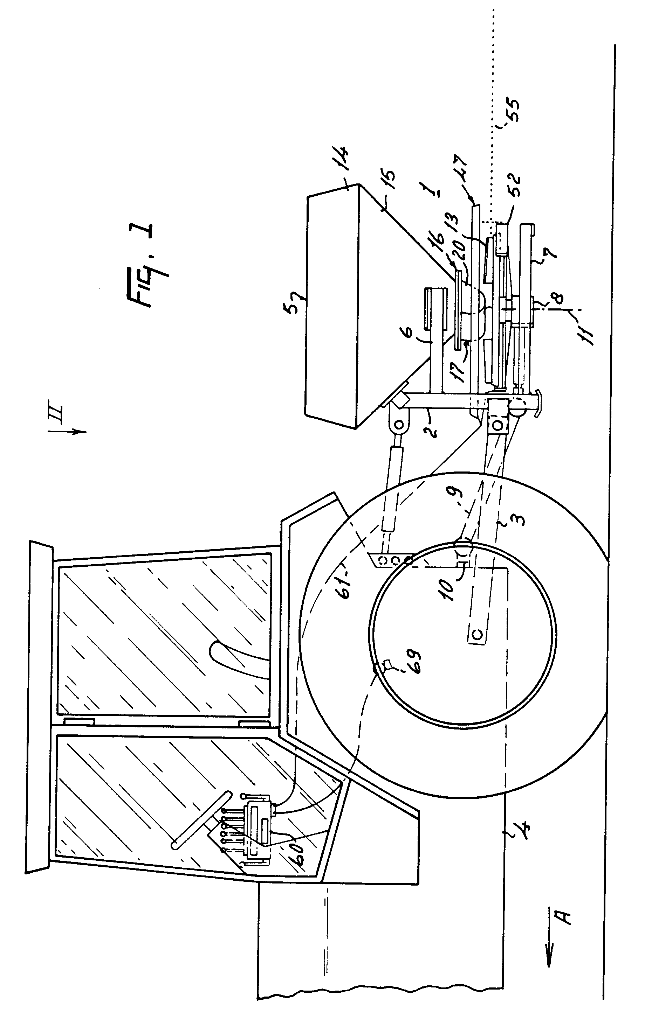

The hopper 5 is in open connection with the doser portion 17 (Figures 1, 3, 4 and 5), which essentially constitutes part of the hopper 5.

The doser portion 17 is contiguous to the lower edge 16 of the hopper 5 and is bounded by a wall portion 18 having the shape of part of a cylinder surface, by a wall portion 19 connecting the straight lower, approximately horizontal boundary line of the wall portion 18 to part of the circular lower edge 16 of the hopper 5 (Figure 3) as well as by two parallel, upwardly directed flat side plates 20 (Figures 1 and 5). That wall portion 18, which is folded into the shape of a cylinder portion, extends from the front side of the doser portion 17 downwardly and rearwardly to an imaginary, upwardly directed plane that contains the rotary shaft of the spreading member (the centre line 11). The centre line of the wall 18, which is folded into the shape of a cylinder portion, is denoted in Figures 3 and 4 by the reference numeral 21, extends approximately horizontally and is located at some distance in front of and parallel to the above-stated imaginary plane through the centre line 11. Seen in plan view (Figures 2 and 4) and taken in the direction of operative travel A, the centre line 21 encloses at the left-hand side of the machine an angle of approximately 135° with said direction A, at least when the doser portion 17 is in the position as shown in the said Figures.

The cylindrically folded wall portion 18 is provided with a plurality of doser apertures 22 which are substantially rectangular and of a slotted form. Seen in a direction parallel to the centre line 21, the apertures 22 have their largest dimension located concentrically about the said centre line, are arranged parallel relative to each other (Figures 5 and 6) and are pointed at their lower ends. The pointed lower ends are arranged on a curved line which, in plan view (Figure 4), is located around the centre line 11. Each of the apertures 22 provided in the forwardly extending wall of the doser portion extends, seen in a direction parallel to the centre line 21 (Figure 3), through a peripheral angle of approximately 30 to 60° from the wall portion 18, preferably through an angle of approximately 45°. The two outermost apertures of the row extend by means of their lower ends to near the bottom side of the wall portion 18, the apertures adjacent thereto are always shifted upwardly through an angle of approximately 10° relative to the neighbouring outermost apertures.

In the embodiment shown, a row of six doser apertures 22 is provided. Each aperture is individually closable by means of a doser slide 23 located against the outer circumference of the wall portion 18. As is shown in Figure 3, each slide 23 is also formed as part of a cylinder wall, i.e. in such a manner that, in the mounted state of the slide, the centre line of said cylinder wall portion coincides with the centre line 21. In its inoperative state, each slide 23 is located alongside and against the outer circumference of the upper portion of the wall portion 18.

By means of guides extending on either side of each doser aperture 22, each slide 23 is slidable around the centre line 21. To that end, each rectangular doser slide 23 is provided near its lower edge with lugs 24 having a hole. Inside said hole there is arranged a shaft 25 which extends parallel to the centre line 21 and about which is connected pivotably the end of a piston rod of a hydraulic cylinder 26. Each of the apertures 22 has assigned to it such a hydraulic cylinder 26. The ends of the cylinders 26 facing away from the shaft 25 are arranged pivotably about a shaft 27 which extends parallel to the centre line 21 and supports the said ends of all the cylinders 26. The shaft 27 is coupled pivotably by means of a plurality of strips 28 (Figures 3, 4) to a shaft 29 extending parallel to the shaft 27 and remote therefrom.

As is apparent from Figure 3, in the position wherein all the apertures 22 are fully open, the distance between the shaft 29 and the centre line 21 is less than that between the shaft 27 and the centre line 21, so that, taken in a direction from the shaft 27, the strips 28 extend towards the centre line 21 and enclose an angle with the cylinders 26.

Halfway its length bridging the cylinders 26, the shaft 27 is supported pivotably in the end of the piston rod of a hydraulic cylinder 30. At its end facing away from the shaft 27, the cylinder 30 is connected pivotably about a shaft 31 (Figure 6). The shaft 31 is fastened in the free end of a bracket 32, whose end facing the doser portion 17 is connected rigidly thereto. The ends of the shaft 29 are also fastened in the bracket 29. Taken in the position shown in Figure 3 wherein the doser apertures are fully open, the hydraulic cylinders 26 and the cylinder 30 are approximately in alignment.

The above-stated constructional elements 24 to 32 are located at the outer side of the doser portion 17 and, as is apparent from Figure 4, are arranged at an oblique angle relative to the direction of operative travel A in front thereof. Seen in plan view according to Figure 4 and taken in the direction of operative travel A, in the shown position of the doser portion 17, the centre lines of the cylinders 26 and of the cylinder 30 enclose an angle of approximately 45° with the direction of operative travel A.

The hydraulic cylinders 26 and 30 are all of the double-acting type. When the cylinder 30 is blocked hydraulically and one or more of the cylinders 26 is/are energized such that its/their piston rod(s) emerges/emerge, then the doser slide(s) 23 coupled to the said cylinder(s) 26 will pivot downwardly about the centre line 21 and partly or fully close the doser aperture(s) 22 associated with the relevant slide(s). Thus it is possible to change the effective width of each individual doser aperture 22. In this connection, the position of the strips 28 is not changed.

When the hydraulic cylinder 30 is energized such that its piston rod emerges towards the cylinders 26, the strips 28 (whose directions enclose an acute angle with that of the centre line of the cylinder 30 when the apertures 22 are fully open) will pivot downwardly about the shaft 29, whereby the shaft 27, as is apparent from Figure 3, will describe the arc of a circle about the centre line of said shaft 29. The relative arrangement and dimensioning is such that, by means of the lugs 24, the hydraulic cylinders 26 pivot downwardly all the doser slides 23 as an integral whole about the centre line 21, thereby partly or fully closing the doser apertures 22. By actuating the cylinder 30 it is possible to operate all the doser slides 23 simultaneously. Alternatively, it is possible, of course, to actuate the cylinder 30 and one or more of the cylinders 26 simultaneously, so that all the doser slides 23 will pivot simultaneously and at the same time to different extents about the centre line 21.

Around the centre line 21 there is arranged a shaft 33 which by means of bearings 34 and 35 is supported in each of the two side walls 20 of the doser portion 17 (see also Figure 5).

At one of the side walls 20 there is positioned a hydraulic motor 36 which is arranged next to the centre line 21 and, during operation, is fed continuously from the hydraulic system of the tractor. The outgoing shaft of the motor 36 is provided with a worm which meshes with a worm wheel 37 fitted on the shaft 33. Consequently, when the motor 36 is driven, the shaft 33 is caused to rotate at a relatively small number of revolutions. Inside the doser portion 17, there are arranged on the shaft 33 at regular interspaces doser discs 38 which extend perpendicularly to the centre line 21. As is apparent from Figure 3, each doser disc 38 is provided at its periphery with outwardly directed, pointed projections 39 arranged along the entire circumference thereof. The position of the discs 38 is such that, seen in the cross-sectional view of Figure 5, the centre line of each disc approximately coincides with that of one of the slotted doser apertures 22. Therefore, in this embodiment wherein there are six doser apertures 22, there are provided six doser discs. The shaft 33 and the discs 38 form together with their drive a doser device 40.

As is apparent from Figure 3, the doser device 40 as a whole is arranged obliquely behind and somewhat obliquely above the doser apertures 22. The doser device 40 is driven in the direction B. The funnel-shaped space between the doser device 40 and the wall portion 19 of the doser portion 17 located therebehind has for its object to feed material from the hopper 5 to the doser apertures 22. This feed of material is supported by the rotating projections 39, which at the same time serve to pulverize clotted material particles and to prevent bridging of the material to be spread.

The circular lower edge 16 of the hopper 5 is provided around its periphery with an outwardly extending flange 41 (Figures 3 and 5). A spacer ring 42 is provided below the outer edge of the flange 41. Below the spacer ring 42 there is attached an inwardly directed guide ring 43, which extends to below the lower edge 16 of the hoppper 5. The doser portion 17 is provided with an outwardly extending flange 44, which is inserted with some clearance into the space between the flange 41 and the guide ring 43 in such a manner that the doser portion 17 can be pivoted relative to the hopper about the centre line 11. In a position located at the rear side of the hopper 5, there is fitted to the wall portion 19 a rearwardly extending lug 45 (Figure 3). Near the free end of the lug 45, the end of a hydraulic cylinder 46 is arranged pivotably about a pivot shaft which extends parallel to the centre line 11. The end of the piston rod of the said cylinder is connected capable of pivoting about a pivot shaft, which also extends parallel to the centre line 11, to a support 47A which is connected rigidly to the hopper 5. The centre line of the hydraulic cylinder 46 perpendicularly crosses the centre line 11.

By actuating the hydraulic cylinder 46, the entire doser portion 17, the doser device 40 together with its drive as well as the component parts 24 to 32 pivot relative to the hopper 5 as an integral whole about the pivot shaft 11. The hydraulic cylinder 46 can be operated from the driver's seat of the tractor. Thus, it is possible to displace the machine's spread pattern relative to the machine, as the position of the doser apertures 22 relative to the spreading member 12 is changed when the doser portion 17 pivots about the centre line 11.

Taken in the upward direction and seen in Figure 3, in the region of the lower half of the doser device 40 there is provided an annular screen 47 which extends fully around the doser portion 17 and is located parallel to a plane located perpendicularly to the centre line 11. The screen 47 is connected rigidly relative to the hopper 5 by means of two supports 47A. Seen in a cross-sectional view (Figure 3), the screen 47 has an upper plate 48 extending concentrically around the centre line 11. At both its inner edge and its outer edge, the upper plate 48 is provided with downwardly folded edge plates 49.

The screen 47 extends at a short distance above the upper side of the spreading member 12.

Around the housing of the gear box 8 there is arranged a bushing 50, to which are connected rigidly three radially extending spokes 51 (Figure 4). At their free ends, the spokes 51 support an upwardly directed wall 52 which has the shape of part of a cylinder. The wall 52 coaxially surrounds the centre line 11. Taken in a direction parallel to the centre line 11 (Figure 4), the wall 52 extends through a circumferential angle exceeding 180°, e.g. through an angle in the range between 190° and 220°. In any case, the said circumferential angle exceeds that over which the material is spread, taking into account the adjustability of the doser apertures 22 relative to the hopper 5. Seen in the plan view shown in Figure 4 and also taken at that side of the machine which in Figure 4 is the right-hand side, the midway point of the circumferential angle through which the wall 52 extends encloses with the direction of operative travel A an angle in the range from 120° to 160°, preferably approximately 140°. In Figure 4, a radial line extending from the centre line 11 towards said midway point of the circumferential angle of the wall 52 is denoted by the reference numeral 53.

On the outer periphery of the wall 52 there are provided a plurality of light sources 54, which are arranged such that the emitted light is transmitted upwardly and parallel to the centre line 11. The said light sources are all of an indentical construction and produce the same luminous flux. The light sources or lamps 54 may emit visible light or, alternatively, e.g. infrared radiation. In addition, the light sources 54 may also be designed as known per se laser units. Taken in the upward direction, all the light sources 54 extend to the same plane directed perpendicularly to the centre line 11. This plane is located at a short distance below the plane wherein the spreading member 12 spreads material. The said last plane is shown in Figure 3 as a broken line indicated by the reference numeral 55. The distance between the plane 55 and a plane through the topmost ends of the light sources 54 is, for example, approximately 2 cms. As is shown in the cross-sectional view of Figure 3, the spreading member 12 itself has its lower portion located within the wall 52; taken in the upward direction, the blades 13 are located above the upper edge of the wall 52 and the topmost ends of the light sources 54.

Taken in the direction of the periphery of the wall 52, the light sources 54 are arranged uniformly distributed. In this embodiment, two adjacent light sources 54 enclose with the the centre line 11 a circumferential angle of approximately 15°. As is shown in Figure 4, the light sources 54 are arranged symmetrically relative to the centre of the circumferential angle constituted by the wall 52, which centre is indicated by the reference numeral 53. In the embodiment, the light sources 54 are arranged in pairs, two adjacent light sources together constituting a pair and, as will be set out hereinafter, co-operating with each other. On both sides of the radian 53 there are provided three pairs of light sources 54, so six pairs in all. This number of pairs is equal to the number of doser apertures 22. Consequently, the total number of light sources 54 is twelve.

As the light sources 54 are fitted relative to the housing of the gear box 8, they are in a fixed position relative to the machine frame 1.

Outside the reach of the circumferential angle about the centre line 11 within which the light sources 54 are arranged, additional light sources 56 are positioned outside each of the two ends of the said reach, which additional light sources 56 are also connected along the periphery of the wall 52 and are arranged in a similar manner (also as regards the vertical direction). The light sources 56 are of a design which is identical to that of the light sources 54. Each additional light source 56 is located at a circumferential angle of approximately 15 to 20° from the adjacent light source 54. The light sources 56 are arranged such that, seen in plan view, they are located in a region outside the area through which the material is spread when the spread pattern thereof is located centrally behind the machine.

At the lower side of the upper plate 48 of the screen 47 and between the two edge plates 49 there is provided an array of light-sensitive units 57 (Figures 3, 4). The units 57 are arranged such that they can receive and measure upwardly directed light. They are so designed in a known per se manner that they transduce the intensity of the light to be received, approximately in proportion to this intensity, into electric voltages or currents.

Above each of the light sources 54 and also above each of the two additional light sources 56 there is arranged a light-sensitive unit 57 or an additional light-sensitive unit 58, respectively, in such a manner that the light emitted by the associated light source is received by the superjacent light-sensitive unit 57 or by the superjacent additional light-sensitive unit 58, respectively. The units 57 and 58 may be photocells. The light sources 54 and 56 are of identical construction and, in the upward direction, they extend to the same plane located perpendicularly to the axis of rotation of the spreading member. The respective distances of the light sources and the light-sensitive units to the axis of rotation of the spreading member are approximately the same. The light-sensitive units 57 and 58, taken in downward direction, extend to the same plane directed perpendicularly to the axis of rotation of the spreading member. The light sources 54 and the associated light-sensitive units 57 are arranged on both sides of the area containing spread material. Consequently, the intensity of the light received by the units 57 is influenced by the material spread, which partly screens the light emitted by the light sources 54 in a direction parallel to the centre line 11.

The material spread approximately parallel to a plane perpendicular to the centre line 11 (spread plane 55) intersects or crosses approximately perpendicularly the light beams emitted by each of the light sources 54. Of course, the units 57 and the additional units 58 are of a type suitable for measuring visible light, infrared light or laser light, respectively.

The intensity of the light emitted by the additional light sources 56 and received by the additional light-sensitive units 58 is not affected by the material spread when the spread pattern is located symmetrically behind the machine. However, when the doser portion 17 has pivoted in a wanted or an unwanted manner relative to the hopper 5 about the centre line 11 in the above-described manner and the spread pattern is no longer located exactly straight behind the machine, the intensity of the light emitted by one of the light sources 56 and received by the associated additional light-sensitive unit 58 is affected by the material spread, so that, in that case, the measuring results of the two additional light-sensitive units 58 are different.

As regards the measuring results of the light beams received by the light-intensive units 57, it should be noted that the value thereof depends on the quantity of material particles partly intercepting part of the light between each light source 54 and the associated unit 57. When the measuring results of the light-sensitive units 57 are compared with each other in the sequence wherein they are arrayed, there will be obtained a picture of the uniformity wherein the material is distributed over the circumferential angle of the spread pattern. The measuring results of the additional light-sensitive units 58, which correspond to the light sources 56, provide an indication as to the position of the spread pattern relative to the machine and relative to the direction of operative travel A, respectively. If, taken in the direction of operative travel A and as seen in Figure 4, the spread pattern would have shifted to the right, the intensity of the light measured by the additional unit 58 at the right-hand side would be less than that measured by the unit 58 at the left-hand side.

Outside the circumferential angle occupied by the light-sensitive units 57 and the two additional light-sensitive units 58, there is arranged a further light-sensitive unit 59 which, at least in the embodiment shown (Figure 4), in plan view is located in a plane intersecting the centre line 11 and constituting a symmetry plane for the group of doser apertures 22. The light-sensitive unit 59 may be provided with an infrared filter. The distance between the further unit 59 and the centre line 11 is equal to that between the centre line 11 and the units 57 and 58. However, the further unit 59 may also be arranged in a different location, although with the proviso that it is located outside the circumferential angle covered by the spread material at whichever setting of the doser apertures 22. The unit 59 is mounted under the screen 47 in the same manner as the other light-intensive units and is directed in an identical way and, therefore, is suitable to receive upwardly directed light beams. The further unit 59 measures the intensity of the ambient light, the same intensity which is also measured by the light-sensitive units 57 and 58 (in addition to the light emitted by the light sources). The ambient light received by the further unit 59 will substantially be light received from the soil. Therefore, it is a further requirement for the position of the unit 59 that the area from which it receives light is of the same nature as that below each of the units 57 and 58.

The electric voltages or currents generated in the unit 59 by the received light are subtracted by means of subtracting circuits present in the measuring equipment coupled to the units 57 to 59 from the voltages or currents generated in the units 57 and 58 (or inversely) so as to render it possible to establish only, or to a very high approximation, the influence of the material spread on the intensity of the light emitted by the light sources. Therefore, the further unit 59 is of a construction which is identical to that of the units 57 and 58 and is screened in an identical manner by the screen 47.

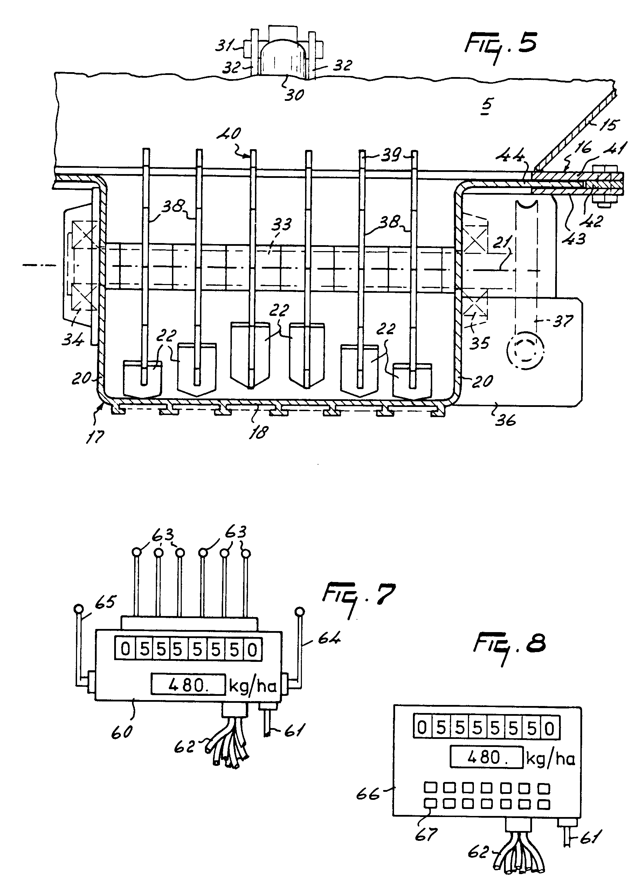

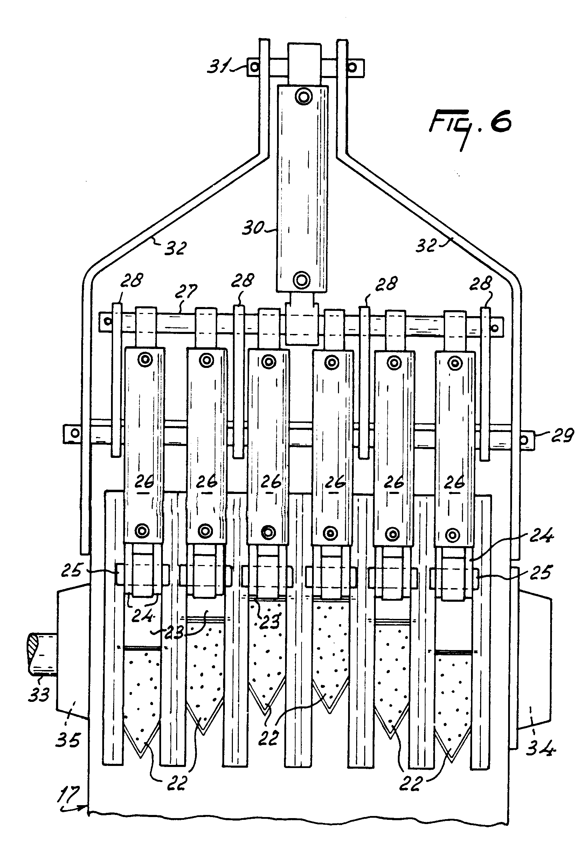

Figures 7 and 8 show two embodiments of a display device 60 and 66, respectively, which at the same time comprises circuits intended to process the information received by the light-sensitive units 57 to 59. The device 60 is connected by means of a wiring 61 to the units 57 to 59 and via hydraulic lines 62 to the hydraulic cylinders 26, 30 and 46 of the machine. The device 60 is arranged near the driver's seat of a tractor moving the machine and, during operation, can be operated directly by the driver. However, the device 60 is mounted detachably near the driver's seat, as it is part of the machine proper.

As has been stated in the foregoing already, the electric voltages or currents (this depends on the nature of the light-sensitive units and the circuit coupled thereto) which originate from the further unit 59 measuring the ambient light are continuously subtracted from those originating from the units 57 and 58 (or inversely). In this connection, it should be observed that the voltages or currents originating from the units 57 are averaged over each pair of adjacent units 57. Seen in the plan view of Figure 4, the voltages or currents of the first pair of units 57, at the right-hand topside, are averaged, also the then subsequent pair of units 57 etc., taken in the direction of rotation C of the spreading member 12. Consequently, the device 60 processes, at least in the embodiment shown, six averages of six pairs of units 57. The average of said first pair of units 57 is at least substantially influenced by the flow of material which has left the doser aperture 22 which in Figure 4 is the extreme right-hand doser aperture, the average of the second pair is influenced by the flow of material which has left the doser aperture that is shown as the second one from the right, etc.

Each of the six average measuring results less the measuring result of the further unit 59, which measures the intensity of the ambient light, is digitized in a known per se manner and displayed sequentially on displays provided in the display device 60 in the form of a digit. Taken in a direction from the left to the right, these are the second to seventh digit inclusive as shown in Figure 7.

It will be obvious that the ultimate measuring result is a measure of the uniformity of the distribution of the quantity of material spread through the circumferential angle of the spread pattern. In this connection, it should be noted that the expression "uniformity of distribution" means that the material is divided over the spread pattern in a desired manner and not that an equal quantity of material is spread over e.g. each 10° of the spread pattern around the axis 11. A "uniform distribution" often means that the material is spread over the spread pattern in such a way that in the middle of the spread pattern a larger quantity of material is distributed per unit of area than to the ends of the distribution pattern. For example, the distributed quantity of material per unit of area may decrease gradually to zero from the middle of the spread pattern of the outer boundaries of the spread pattern. Figure 7 shows, by way of example, a row of six digits "5". This would imply that the quantity of material spread through the circumferential angle of the spread pattern is distributed uniformly. Should the value of one or more of the digits deviate from that of the other digits, this would indicate that the spread of the material is not uniform. The magnitude of the numerical value may be adjustable at a predetermined voltage or current generated by the light-sensitive units on the basis of calibration.

Near each window of the display device 60 displaying a measure of the intensity of the material spread per sector of the circumferential angle of the spread pattern there is provided a lever 63, each of which levers corresponds to that sector of the spread pattern of which the material intensity is displayed by the nearest digit. Each lever 63 operates a hydraulic slide which corresponds to the supply of the pressurized hydraulic fluid to a hydraulic cylinder 26 which corresponds to the doser slide 23 of the doser aperture 22 which is operative with respect to the relevant spread sector. By adjusting the lever 63 of a sector which deviates relative to the other sectors, it is possible to accomplish that the relevant doser aperture 22 is closed or opened to a greater extent. Thus, by operating the levers 63, it is possible to set a uniform distribution of the material through the circumferential angle of the spread pattern, which is displayed by the nearest display.

If the total quantity of material to be spread per unit of surface is to be changed, the driver can effect this change by operating a lever 64.

The lever 64 constitutes a control member for a hydraulic slide for adjusting the hydraulic cylinder 30, which, as has been set out in the foregoing, simultaneously moves all the doser apertures 23, independently of their individual positions.

The device 60 also includes an adder circuit for the voltages or currents generated by the light-sensitive units 57 which is provided in addition to the above-described circuit for establishing the uniformity of the distribution of the material. This know per se adder circuit produces a measuring result which is a measure of the total quantity of material spread. On the basis of a calibration effected in advance for a given type of fertilizer, the electrically measured result can be related to the quantity of material spread per unit of surface expressed e.g. in kilogrammes per hectare. As is shown in Figure 7, the device 60 has a display for displaying this quantity of material.

After the voltages or currents generated in the further light-sensitive unit 59 have been subtracted therefrom, the voltages or currents generated in each of the two additional light-sensitive units 58 are each individually digitized in a similar manner and displayed as digits on displays of the display device 60. In this embodiment, this digitizing operation is effected such that, when the units 59 receive a light intensity which is not influenced by material spread, the digit "0" is displayed. These two digits are displayed on either side of the digits which represent the uniformity of the distribution of the material and, together with said last digits, are arranged in the same order as that wherein the light-sensitive units are provided on the machine.

When now one of the digits originating from the units 58 (at least in accordance with the embodiment) does not have the value "0" but a different value, whilst the other digit originating from a unit 58 does have the value "0", this is an indication that the spread pattern of the machine has pivoted about the centre line 11 and is not located centrally behind the machine, as one of the units 58 has been influenced by material spread.

To correct this phenomenon, there is provided a lever 65 which operates a hydraulic slide for adjusting the hydraulic cylinder 46. By adjusting the cylinder 46, the doser portion 17 can be pivoted, together with the doser device 40 and also together with the mechanism operating the doser slides, independently of the further possible adjustments about the centre line 11 until the two displays which correspond to the units 58 again display the digit "0".

Of course, it is also possible to use on a display device of a type such as the display device 60 other numerical values as an indication of the uniformity of the spread of material and of the position of the spread pattern behind the machine.

Figure 8 shows an alternative embodiment of the display device, denoted by reference numeral 66. The establishment of the uniformity of the spread of material over the spread pattern and the display thereof as well as the establishment as to whether or not the units are influenced by material spread and the display thereof in the form of digits are similar to those in accordance with the embodiment of Figure 7. The device 66 is provided with a plurality of push-buttons 67, by means of which it is possible to set the desired values of the digits indicating the position of the spread pattern and the uniformity of the spread pattern, respectively. The keyed-in value of each digit is converted into an analog value as a voltage or current and compared to the measuring results of the relevant unit 57 or 58, respectively. A differential voltage or differential current between the actual value and the target value is used, after amplification, to drive e.g. a small stepper motor which adjusts a hydraulic slide which changes the position of an associated cylinder 26 and/or 30 and/or 46 until this differential voltage or differential current becomes a "0".

In a similar manner, a keyed-in value for the total quantity of material to be spread per unit of surface area is converted into an analog form, a difference with the result of the above-stated adder circuit also being converted, e.g. by means of a stepper motor, as an adjustment of the hydraulic slide to adjust the cylinder 30.

The quantities of material spread per unit of surface area as displayed on the devices 60 and 66 depend on the quantity of material that is delivered through the apertures 22 per unit of time and on the travelling speed of the machine. Preferably, the devices 60, 66 are provided with a measuring device for measuring the rate of travel of the machine, e.g. an inductive sensor 69 arranged in a known per se manner near the circumference of a wheel rim. An output voltage or current derived from the pulses produced in the sensor 69 is included in the above-mentioned circuits in such a manner that the occurring or keyed-in value of the quantity of material desired to be spread per unit of a surface area at a standard speed is automatically corrected in proportion to the quotient of the actual speed and the standard speed.

To the periphery of the spreading member 12 there is fitted a small brush 68 (Figure 3) which, taken in the direction of the centre line 11, is arranged at such a height that it just contacts the upper sides of the light sources 54 and 56. Thus it is possible to achieve that dust or fertilizer which might be present on the light sources are removed continuously.

As an alternative embodiment, it is possible to connect in the region of the upper sides of the light sources 54, 56 at the periphery of the spreading member 12 one or more blades which, taken in a direction away from the centre line 11, extend to just near but within the light sources. These blades produce an outwardly directed air current, which keeps the light sources free from dust particles.

The invention can also be utilized for spreading members of machines having more than one spreading member, i.e. for each spreading member individually, but also as regards combinations of measuring results from light-sensitive units associated with different spreading members.

The machine according to the invention is in particular suitable for use in modern agriculture, in which desired quantities of fertilizer must be distributed accurately over the field.

## Claims

1. A machine for spreading material, such as fertilizer, which machine comprises a frame (1), a hopper (5) and at least one driven spreading member (12), the machine includes at least two doser apertures (22) for delivering the material from the hopper (15) to one single spreading member (12) which spreads during operation of the machine the material over a circumferential angle around the spreading member, which circumferential angle includes a number of sectors equal to the number of doser apertures each of which provides substantually material to one sector, doser slides (23) being provided movably along the apertures and the doser slides being connected with an adjusting member (26) to close the apertures to a greater or lesser extent, characterized in that each doser slide (23) is connected with a separate adjusting member (26) and the adjusting members each being separately actuateable to close the doser apertures (22) separately to a greater or lesser extent, each of the adjusting members (26) is cooperative with a measuring unit (57) provided in the machine and able to measure the distribution of the material spread during operation of the machine over the sections of the circumferential angle.

2. A machine as claimed in claim 1 characterized in that each of the adjusting members (26) is coupled with the measuring unit (57) through the intermediary of a display device (60, 66), which displays the distribution of the material over the sectors of the circumferential angle.

3. A machine as claimed in claim 2, characterized in that the display device (60, 66) includes a digit for each sector to display the quantity of material spread over the respective sector.

4. A machine as claimed in claim 2 or 3 characterized in that the display device is provided with means with which the desired distribution can be set, the said means and the measuring unit being coupled to control the size of the doser apertures (22) automatically.

5. A machine as claimed in any one of the preceding claims, characterized in that for each adjusting member (26) and respective aperture (22) at least one measuring unit (57) is provided near the circumference of the spreading member in a fixed postion in the machine.

6. A machine claimed in any one of the preceding claims, characterized in that the measuring units (57) can measure the distribution of the material over the circumferential angle by a quantity of light or changes in a quantity of light which intersects the material spread over the said circumferential angle during operation of the device.

7. A machine as claimed in claim 6, characterized in that the quantity of light is emitted by light sources (54, 56) which are in a fixed position relative to the frame (1), the light emitted by at least one light source being received by at least one light-sensitive unit (57, 58).

8. A machine as claimed in claim 7, characterized in that a light screen (48) is arranged over a light source (54, 56) - light sensitive unit (57, 58) combination.

9. A machine as claimed in any one of claims 6 to 8, characterized in that the machine includes a measuring device (59) for measuring ambient light.

10. A machine as claimed in claim 9 characterized in that the measuring device unit (59) measuring ambient light is identical to the measuring unit (57) measuring the quantity of material spread, the measuring device (59) measuring the ambient light being positioned outside the circumferential angle, within which the material can be spread.

11. A machine as claimed in any one of claims 2 to 10, as far as dependent to claim 2, characterized in that a voltage or current generated by one or more measuring units (57, 58) is displayed, after amplification and decoding, on the display device (60, 66) as a numerical value.

12. A machine as claimed in any one of the preceding claims, characterized in that the measuring unit (57) can measure the quantity of material spread per unit of surface area.

13. A machine as claimed in any one of the preceding claims, characterized in that the machine includes a device (57, 58), by means of which, during operation, it is possible to measure by light measurement whether the spread pattern of the material spread is located centrally behind the machine.

14. A machine as claimed in any one of the preceding claims, characterized in that the position of the spread pattern relative to the direction of operative travel (A) of the machine can be adjusted to and be locked in any one of a plurality of positions by pivoting the doser apertures (22) about an imaginary, upwardly directed axis (11) relative to the hopper (5).

15. A machine as claimed in claim 14, characterized in that the position of the doser apertures (22) relative to the hopper (5) can be adjusted automatically as a function of the difference of the voltages or currents generated by two additional light-sensitive units (58).

16. A machine as claimed in any one of the claims to 15, as far as dependent to claim 2, characterized in that the display device (60, 66) is provided with means wherein the desired quantity of material to be spread per unit of surface area can be inputted.

17. A machine as claimed in any one of the preceding claims, characterized in that the machine includes means (68) for cleaning at least part of the measuring equipment arranged on the machine.

18. A machine as claimed in any of the preceding claims, characterized in that the doser apertures (22) are each closable to a greater or lesser extent by means of a hydraulical adjusting member.

19. A machine as claimed in any one of the preceding claims, characterized in that all the doser slides (23) are adjustable together with the aid of an additional hydraulic cylinder (30) to set the quantity of material to be spread per unit of surface area.

20. A machine as claimed in any one of the preceding claims, characterized in that the doser apertures (22) are of a slotted shape and, prefereably, are arranged approximately parallel to each other.

21. A machine as claimed in any one of the preceding claims, characterized in that the doser apertures (22) are provided in an arcuate plane (18) arranged near the bottom side of and in connection with the hopper (5), which plane extends rearwardly approximately to an imaginary, upwardly directed plane throught the axis of rotation (11) of the spreading member (12).

22. A machine as claimed in any one of the preceding claims, characterized in that the apertures (22) are located, seen in plan view, at a curved line located around the axis of rotation (11) of the spreading member (12).

23. A machine as claimed in any one of the preceding claims, characterized in that in the hopper (5) near the apertures (22) there is arranged a doser device (40) which is drivable, preferably at different numbers of revolutions by hydraulic means (36), about an approximately horizontal axis (21) and which doser device (40) is provided with doser discs (38), each of which doser discs (38) is provided over a respective doser aperture (22) and, seen in plan view, each doser disc (38) being narrower than the associated doser aperture (22).

## Patentansprüche

1. Streugerät, beispielsweise für Kunstdünger, mit einem Rahmen (1), einem Behälter (5) und mindestens einem angetriebenen Streuglied (12); das Gerät hat mindestens zwei Dosieröffnungen (22) zum Zuführen des Gutes aus dem Behälter (15) an ein einzelnes Streuglied (12), das während des Betriebs des Gerätes das Gut über einen auf das Streuglied bezogenen Umfangswinkel ausstreut, der eine Anzahl Sektoren umfaßt, die gleich der Anzahl der Dosieröffnungen ist, von denen jede im wesentlichen einen Sektor mit Gut versorgt, und wobei Dosierschieber (23) vorgesehen sind, die an den Öffnungen entlang bewegbar und mit einem Stellglied (26) verbunden sind, um die Öffnungen mehr oder weniger weitgehend zu schließen,
dadurch gekennzeichnet, daß jeder Dosierschieber (23) mit einem separaten Stellglied (26) verbunden ist, und daß jedes einzelne Stellglied separat zu betätigen ist, um die Dosieröffnungen (22) separat mehr oder weniger weitgehend zu schließen, wobei jedes Stellglied (26) mit einer Meßeinheit (57) zusammenwirkt, die in dem Gerät vorgesehen ist, und mittels der die Verteilung des Gutes zu messen ist, das während des Betriebs des Gerätes über die Sektoren des Umfangswinkels ausgestreut wird.

2. Gerät nach Anspruch 1,
dadurch gekennzeichnet, daß jedes Stellglied (26) mit der Meßeinheit (57) mittels einer Anzeigevorrichtung (60, 66) verbunden ist, die die Verteilung des Gutes auf die Sektoren des Umfangswinkels anzeigt.

3. Gerät nach Anspruch 2,
dadurch gekennzeichnet, daß in der Anzeigevorrichtung (60, 66) jedem Sektor eine Zahl zugeordnet ist, um die über den jeweiligen Sektor ausgestreute Gutmenge anzuzeigen.

4. Gerät nach Anspruch 2 oder 3,
dadurch gekennzeichnet, daß die Anzeigevorrichtung eine Vorrichtung aufweist, mittels der die gewünschte Verteilung einzustellen ist, und die mit der Meßeinheit verbunden ist, um die Größe der Dosieröffnungen (22) automatisch zu steuern.

5. Gerät nach einem der vorhergehenden Ansprüche,
dadurch gekennzeichnet, daß für jedes Stellglied (26) und die zugehörige Öffnung (22) mindestens eine Meßeinheit (57) in der Nähe des Umfanges des Streugliedes in dem Gerät fest angeordnet ist.

6. Gerät nach einem der vorhergehenden Ansprüche,
dadurch gekennzeichnet, daß mittels der Meßeinheiten (57) die Verteilung des Gutes auf den Umfangswinkel durch eine Lichtmenge bzw. Änderungen in einer Lichtmenge zu messen ist, die das Gut durchdringt, das während des Betriebs des Gerätes über den Umfangswinkel ausgestreut wird.

7. Gerät nach Anspruch 6,
dadurch gekennzeichnet, daß die Lichtmenge von Lichtquellen (54, 56) ausgesandt wird, die relativ zu dem Rahmen (1) lagefest angeordnet sind, wobei das von mindestens einer Lichtquelle ausgesandte Licht von mindestens einer lichtempfindlichen Binheit (57, 58) empfangen wird.

8. Gerät nach Anspruch 7,
dadurch gekennzeichnet, daß über einer Kombination aus Lichtquelle (54, 56) und lichtempfindlicher Einheit (57, 58) ein Schirm (48) zur Lichtabschirmung angeordnet ist.

9. Gerät nach einem der Ansprüche 6 bis 8,
dadurch gekennzeichnet, daß das Gerät eine Meßeinrichtung (59) zum Messen des Umgebungslichtes aufweist.

10. Gerät nach Anspruch 9,
dadurch gekennzeichnet, daß die das Umgebungslicht messende Meßeinrichtung (59) gleich ausgebildet ist wie die Meßeinheit (57), die die Menge des ausgestreuten Gutes mißt, wobei die das Umgebungslicht messende Meßeinrichtung (59) außerhalb des Umfangswinkels angeordnet ist, innerhalb dessen das Gut auszustreuen ist.

11. Gerät nach einem der Ansprüche 2 bis 10, soweit sie von Anspruch 2 abhängen,
dadurch gekennzeichnet, daß ein von einer oder mehreren Meßeinheiten (57, 58) erzeugtes Spannungs- oder Stromsignal nach Verstärkung und Umwandlung als numerischer Wert in der Anzeigevorrichtung (60, 66) angezeigt wird.

12. Gerät nach einem der vorhergehenden Ansprüche,
dadurch gekennzeichnet, daß mittels der Meßeinheit (57) die Menge des pro Flächeneinheit ausgestreuten Gutes zu messen ist.

13. Gerät nach einem der vorhergehenden Ansprüche,
dadurch gekennzeichnet, daß das Gerät eine Vorrichtung (57, 58) aufweist, mittels der während des Betriebes durch Lichtmessung festzustellen ist, ob das Streubild des Streugutes mittig hinter dem Gerät liegt.

14. Gerät nach einem der vorhergehenden Ansprüche,
dadurch gekennzeichnet, daß die Lage des Streubildes relativ zur Arbeitsrichtung (A) des Gerätes durch Drehen der Dosieröffnungen (22) um eine gedachte, aufwärts gerichtete Achse (11) relativ zu dem Behälter (5) in eine von mehreren Positionen einzustellen und in ihr festzulegen ist.

15. Gerät nach Anspruch 14,
dadurch gekennzeichnet, daß die Position der Dosieröffnungen (22) relativ zu dem Behälter (5) als Funktion der Differenz zwischen den Spannungen oder Strömen, die von zwei zusätzlichen lichtempfindlichen Einheiten (58) erzeugt werden, automatisch einzustellen ist.

16. Gerät nach einem der Ansprüche 2 bis 15, soweit sie von Anspruch 2 abhängen,
dadurch gekennzeichnet, daß die Anzeigevorrichtung (60, 66) eine Vorrichtung aufweist, in die die gewünschte, pro Flächeneinheit auszustreuende Gutmenge einzugeben ist.

17. Gerät nach einem der vorhergehenden Ansprüche,
dadurch gekennzeichnet, daß das Gerät eine Vorrichtung (68) zum Reinigen mindestens eines Teiles der an dem Gerät angeordneten Meßeinrichtungen aufweist.

18. Gerät nach einem der vorhergehenden Ansprüche,
dadurch gekennzeichnet, daß die Dosieröffnungen (22) jeweils mittels eines hydraulischen Stellgliedes mehr oder weniger weitgehend zu schließen sind.

19. Gerät nach einem der vorhergehenden Ansprüche,
dadurch gekennzeichnet, daß sämtliche Dosierschieber (23) mittels eines zusätzlichen Hydraulikzylinders (30) gemeinsam einzustellen sind, um die pro Flächeneinheit auszustreuende Gutmenge einzustellen.

20. Gerät nach einem der vorhergehenden Ansprüche,
dadurch gekennzeichnet, daß die Dosieröffnungen (22) schlitzförmig ausgebildet und vorzugsweise etwa parallel zueinander angeordnet sind.

21. Gerät nach einem der vorhergehenden Ansprüche,
dadurch gekennzeichnet, daß die Dosieröffnungen (22) in einer gewölbten Fläche (18) angeordnet sind, die nahe dem Boden des Behälters (5) angeordnet und mit dem Behälter verbunden ist, und die sich nach hinten bis etwa zu einer nach oben gerichteten, durch die Drehachse (11) des Streugliedes (12) verlaufenden Ebene erstreckt.

22. Gerät nach einem der vorhergehenden Ansprüche,
dadurch gekennzeichnet, daß die Öffnungen (22) in Draufsicht auf einem die Drehachse (11) des Streugliedes (12) umgebenden Bogen angeordnet sind.

23. Gerät nach einem der vorhergehenden Ansprüche,
dadurch gekennzeichnet, daß in dem Behälter (5) nahe den Öffnungen (22) ein Dosierer (40) vorgesehen ist, der, vorzugsweise mittels einer Hydraulikvorrichtung (36) und mit unterschiedlichen Drehzahlen, um eine annähernd horizontale Achse (21) anzutreiben ist und Dosierscheiben (38) aufweist, von denen jede über einer zugehörigen Dosieröffnung (22) angeordnet ist, wobei in Draufsicht jede Dosierscheibe (38) kleiner ist als die zugehörige Dosieröffnung (22).

## Revendications

1. Machine pour épandre de la matière, telle que de l'engrais, laquelle machine comprend un châssis (1), une trémie (5) et au moins un organe épandeur entraîné (12), la machine comportant au moins deux ouvertures doseuses (22) pour débiter la matière à partir de la trémie (15) à un organe épandeur unique (12) qui épand la matière pendant la marche de la machine sur un angle circonférentiel autour de l'organe épandeur, lequel angle circonférentiel inclut un nombre de secteurs égal au nombre des ouvertures doseuses, chacune desquelles débite pratiquement de la matière à un secteur, des tiroirs doseurs (23) étant prévus mobiles le long des ouvertures et les tiroirs doseurs étant reliés à un organe de réglage (26) pour fermer les ouvertures dans une mesure plus ou moins grande,
**caractérisée** en ce que chaque tiroir doseur (23) est relié à un organe de réglage (26) séparé, et les organes de réglage pouvant chacun être actionné séparément pour fermer les ouvertures doseuses (22) dans une mesure plus ou moins grande, chacun des organes de réglage (26) coopérant avec un dispositif de mesure (57) prévu dans la machine et apte à mesurer la répartition de la matière épandue pendant le fonctionnement de la machine sur les sections de l'angle circonférentiel.

2. Machine selon la revendication 1, caractérisée en ce que chacun des organes de réglage (26) est couplé au dispositif de mesure (57) par l'intermédiaire d'un dispositif d'affichage (60, 66) qui affiche la répartition de la matière sur les secteurs de l'angle circonférentiel.

3. Machine selon la revendication 2, caractérisée en ce que le dispositif d'affichage (60, 66) inclut un chiffre pour chaque secteur, pour afficher la quantité de matière épandue sur le secteur respecitf.

4. Machine selon la revendication 2 ou 3, caractérisée en ce que le dispositif d'affichage est muni de moyens avec lesquels peut être réglée la répartition désirée, ces moyens et le dispositif de mesure étant couplés pour commander automatiquement la taille des ouvertures doseuses (22).

5. Machine selon l'une quelconque des revendications précédentes, caractérisée en ce que, pour chaque organe de réglage (26) et l'ouverture (22) respective, au moins un dispositif de mesure (57) est prévu près de la circonférence de l'organe épandeur en position fixe dans la machine.

6. Machine selon l'une quelconque des revendications précédentes, caractérisée en ce que les dispositifs de mesure (57) peuvent mesurer la répartition de la matière sur l'angle circonférentiel par une quantité de lumière ou des changements dans une quantité de lumière qui intersecte la matière épandue sur ledit angle circonférentiel pendant le fonctionnement de la machine.

7. Machine selon la revendication 6, caractérisée en ce que la quantité de lumière est émise par des sources de lumière (54, 56) qui sont en une position fixe par rapport au châssis (1), la lumière émise par au moins une source de lumière étant reçue par au moins une unité (57, 58) sensible à la lumière.

8. Machine selon la revendication 7, caractérisée en ce qu'un écran à lumière (48) est disposé au dessus d'une combinaison de source de lumière (54, 56) et d'unité (57, 58) sensible à la lumière.

9. Machine selon l'une quelconque des revendications 6 à 8, caractérisée en ce que la machine comprend un dispositif de mesure (59) pour mesurer la lumière ambiante.

10. Machine selon la revendication 9, caractérisée en ce que le dispositif de mesure (59) mesurant la lumière ambiante est identique au dispositif de mesure (57) mesurant la quantité de matière épandue, le dispositif de mesure (59) mesurant la lumière ambiante étant positionné à l'extérieur de l'angle circonférentiel à l'intérieur duquel la matière peut être épandue.

11. Machine selon l'une quelconque des revendications 2 à 10, pour autant qu'elle dépende de la revendication 2, caractérisée en ce qu'une tension ou un courant engendré par un ou plusieurs dispositifs de mesure (57, 58) est affiché, après amplification et décodage, sur le dispositif d'affichage (60, 66) sous la forme d'une valeur numérique.

12. Machine selon l'une quelconque des revendications précédentes, caractérisée en ce que le dispositif de mesure (57) peut mesurer la quantité de matière épandue par unité de superficie.

13. Machine selon l'une quelconque des revendications précédentes, caractérisée en ce que la machine comporte un dispositif (57, 58) au moyen duquel il est possible, au cours du travail, de mesurer, par une mesure de lumière, si le modèle d'épandage de la matière épandue est situé centralement derrière la machine.

14. Machine selon l'une quelconque des revendications précédentes, caractérisée en ce que la position du modèle d'épandage par rapport au sens de marche (A) du travail de la machine peut être réglée en n'importe laquelle d'une pluralité de positions et y être verrouillée, en faisant pivoter les ouvertures doseuses (22) autour d'un axe imaginaire (11) dirigé vers le haut, par rapport à la trémie (5).

15. Machine selon la revendication 14, caractérisée en ce que la position des ouvertures doseuses (22) par rapport à la trémie (5) peut être réglée automatiquement en fonction de la différence des tensions ou des courants engendrés par deux unités sensibles à la lumière, supplémentaires (58).

16. Machine selon l'une quelconque des revendications 2 à 15, pour autant qu'elles dépendent de la revendication 2, caractérisée en ce que le dispositif d'affichage (60, 66) est muni de moyens dans lesquels peut être introduite la quantité de matière qu'on désire épandre, par unité de surface.

17. Machine selon l'une quelconque des revendications précédentes, caractérisée en ce que la machine comporte des moyens (68) pour nettoyer au moins une partie de l'appareillage de mesure installé sur la machine.

18. Machine selon l'une quelconque des revendications précédentes, caractérisée en ce que les ouvertures doseuses (22) peuvent chacune être fermée dans une mesure plus ou moins grande au moyen d'un organe hydraulique de réglage.

19. Machine selon l'une quelconque des revendications précédentes, caractérisée en ce que tous les tiroirs doseurs (23) sont réglables sensemble à l'aide d'un vérin hydraulique (30) supplémentaire pour régler la quantité de matière à épandre par unité de surface.

20. Machine selon l'une quelconque des revendications précédentes, caractérisée en ce que les ouvertures doseuses (22) sont en forme de fentes et sont, de préférence, disposées approximativement parallèlement entre elles.

21. Machine selon l'une quelconque des revendications précédentes, caractérisée en ce que les ouvertures doseuses (22) sont prévues dans une surface incurvée (18) disposée près du fond de la trémie (5) et reliée à la trémie, laquelle surface s'étend vers l'arrière, approximativement jusqu'à un plan imaginaire dirigé vers le haut, passant par l'axe de rotation (11) de l'organe épandeur (12).

22. Machine selon l'une quelconque des revendications précédentes, caractérisée en ce que les ouvertures (22) sont situées, en étant vues en plan, sur une ligne courbe située autour de l'axe de rotation (11) de l'organe épandeur (12).

23. Machine selon l'une quelconque des revendications précédentes, caractérisée en ce que dans la trémie (5), près des ouvertures (22), est disposé un dispositif doseur (40) qui peut être entraîné, de préférence à des vitesses de rotation différentes, par des moyens hydrauliques (36), autour d'un axe (21) approximativement horizontal, et lequel dispositif doseur (40) est muni de disques doseurs (38), chacun desquels disques doseurs (38) étant prévu au dessus d'une ouverture doseuse (22) respective, et chaque disque doseur (38) étant, en étant vu en plan, plus étroit que l'ouverture doseuse associée (22).
